(19) Europäisches Patentamt
European Patent Office
Office européen des brevets

(11) **EP 3 688 438 B1**

(12) **EUROPÄISCHE PATENTSCHRIFT**

(45) Veröffentlichungstag und Bekanntmachung des Hinweises auf die Patenterteilung:
**04.01.2023   Patentblatt 2023/01**

(21) Anmeldenummer: **18780098.2**

(22) Anmeldetag: **28.09.2018**

(51) Internationale Patentklassifikation (IPC):
**G01M 3/20** *(2006.01)*      **G01M 3/22** *(2006.01)*

(52) Gemeinsame Patentklassifikation (CPC):
**G01M 3/22; G01M 3/20**

(86) Internationale Anmeldenummer:
**PCT/EP2018/076401**

(87) Internationale Veröffentlichungsnummer:
**WO 2019/063761 (04.04.2019 Gazette 2019/14)**

(54) **VORRICHTUNG UND VERFAHREN ZUR UNTERSCHEIDUNG EINES AUS EINEM LECK AUSTRETENDEN PRÜFGASES VON STÖRGAS**

DEVICE AND METHOD FOR DISTINGUISHING A TEST GAS ESCAPING FROM A LEAK FROM INTERFERING GAS

DISPOSITIF ET PROCÉDÉ POUR SÉPARER UN GAZ DE CONTRÔLE ÉMANANT D'UNE FUITE D'UN GAZ D'INTERFÉRENCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.09.2017   DE 102017217374**

(43) Veröffentlichungstag der Anmeldung:
**05.08.2020   Patentblatt 2020/32**

(73) Patentinhaber: **Inficon GmbH**
**50968 Köln (DE)**

(72) Erfinder: **WETZIG, Daniel**
**50999 Köln (DE)**

(74) Vertreter: **dompatent von Kreisler Selting Werner - Partnerschaft von Patent- und Rechtsanwälten mbB**
**Deichmannhaus am Dom**
**Bahnhofsvorplatz 1**
**50667 Köln (DE)**

(56) Entgegenhaltungen:
EP-A1- 1 555 520          WO-A1-2009/051530
DE-A1-102010 007 417    JP-A- 2001 050 852

**Beschreibung**

Die Erfindung betrifft ein Verfahren zur Unterscheidung eines aus einem Prüfling austretenden Prüfgas von Störgas in der Umgebung des Prüflings bei der Schnüffellecksuche. Die Erfindung betrifft ferner einen entsprechenden Schnüffellecksucher.

Bei der Schnüffellecksuche wird ein auf ein Leck hin zu untersuchender Prüfling mit einem Prüfgas, beispielsweise Helium oder $CO_2$, befüllt und dabei mit einem Druck beaufschlagt, der größer ist als der Druck in der den Prüfling umgebenden äußeren Atmosphäre. Im Falle eines Lecks tritt das Prüfgas dann aus dem Prüfling aus und kann in der äußeren Umgebung des Prüflings gemessen werden. Hierzu wird die äußere Umgebung, insbesondere die äußere Prüflingsoberfläche, mit einer Schnüffelsonde untersucht.

Die Schnüffelsonde weist eine Ansaugöffnung zum Ansaugen eines Gasstromes auf. Die Ansaugöffnung ist über einen Gasleitungsweg mit einem Sensor und einer den Gasstrom erzeugenden Gaspumpe verbunden. Der Sensor ist zur Erfassung des Prüfgaspartialdrucks des Prüfgases in dem angesaugten Gasstrom ausgebildet.

Der Prüfgaspartialdruck ist der Anteil des Drucks des Prüfgases an dem gesamten Druck des angesaugten und geförderten Gasgemisches. Ein typischer Prüfgaspartialdruck-Sensor ist ein Gasanalysator, wie zum Beispiel ein Massenspektrometer/Massenspektroskop oder einer Infrarot-Strahlungs-Absorptions-Messzelle.

Bei der Untersuchung der Prüflingsumgebung auf das Vorhandensein von Prüfgas besteht eine Schwierigkeit darin, dass die den Prüfling umgebende Atmosphäre Gasanteile aufweisen kann, die dem Prüfgas entsprechen oder die ein Messsignal ergeben, dass dem Messsignal des Prüfgases entspricht. Diese Gasanteile werden vorliegend als Störgas bezeichnet, weil sie das Messergebnis verfälschen und die Leckdetektion stören. Beispielsweise kann es sich bei dem zu untersuchenden Prüfling um einen Wärmetauscher handeln, der mit $CO_2$ als Kältemittel gefüllt ist. Das $CO_2$ dient als Prüfgas. In der Umgebung des Prüflings kann $CO_2$ in Form von Atemgas der die Schüffelsonde führenden Person oder als Abgas einer Verbrennungsmaschine vorkommen. Darüber hinaus können bei einem Nachweis des Prüfgases über das Verfahren der Infrarotabsorption oder über einen massenspektroskopischen Nachweis Querempfindlichkeiten zu ähnlichen oder gleichartigen Gasen aus der Prüflingsumgebung bestehen.

Herkömmlicherweise erfolgt eine Unterscheidung des aus einem Leck austretenden Prüfgases von Störgas in der Prüflingsumgebung durch Verwendung einer Schnüffelsonde mit zwei separaten Ansaugöffnungen. Die eine Ansaugöffnung dient zum Ansaugen des Prüfgases und die andere Ansaugöffnung dient zur Referenzmessung in einem Abstand zur Ansaugöffnung. Dabei wird die Gaszusammensetzung in der Prüflingsumgebung auf das Vorhandensein von Prüfgas untersucht. Derartige Lecksucher sind beispielsweise beschrieben in EP 1342070 B1 und EP 22384422 B1. Aufgrund des Abstandes zwischen den beiden Ansaugöffnungen zur Prüfgassuche und zur Referenzmessung wird das Gas zur Referenzmessung nicht am Ort der Prüfgasansaugung aufgenommen, was sich negativ auf das Messergebnis auswirkt.

Der Erfindung liegt vor diesem Hintergrund die Aufgabe zu Grunde, die Unterscheidung eines aus einem Leck in einem Prüfling austretenden Prüfgases von Störgas in der Umgebung des Prüflings bei der Schnüffellecksuche zu verbessern.

Aus EP 7050738 B1 und DE 4408877 A1 ist es bei einem massenspektrometrischen Testgaslecksucher bekannt, den Gasfluss durch den Gaseinlass zu modulieren, um Störeinflüsse der Vakuumpumpe des Massenspektrometers zu unterdrücken. Der beschriebene Testgaslecksucher ist für den Vakuumbetrieb ausgelegt und nicht als Schnüffellecksucher zum Betrieb bei atmosphärischem Umgebungsdruck geeignet. Der Totaldruck des Gases am Gasdetektor ist proportional zu dem Verhältnis aus dem Gasfluss des geförderten Gases und dem Saugvermögen. Eine Beurteilung, ob der gemessene Testgaspartialdruck von Störgas aus der Umgebung des Prüflings oder von aus einem Leck in dem Prüfling ausgetretenem Prüfgas stammt, ist damit nicht möglich. Vielmehr können nur Störungen aus dem Inneren des Messsystems eliminiert werden, wie beispielsweise Störungen durch Saugvermögensschwankungen der Vorpumpe.

EP 1 555 520 A1 beschreibt einen Leckdetektor mit einer Gassonde und einem Umschaltventil, das die Gassonde abwechselnd mit einem Gaseinlass und einem Gasauslass verbindet, um die Sonde mit durch den Auslass angesaugtem Gas zu spülen.

DE 10 2010 007 417 A1 beschreibt ein Lecktestgerät mit einem Messanschluss, einem Außenluftanschluss und einem Reservoir, in dem ein Spülgas zum Spülen des Sensors enthalten ist.

JP 2001050852 A beschreibt eine Schnüffelsonde mit einem Gaseinlass und einer den Gaseinlass umgebenden zylindrischen Abdeckung.

WO 2009/051530 A1 beschreibt ein Leckdetektionssystem mit einer Schnüffelsonde und einem Detektor, der zum Detektieren einer in der Nähe der Schnüffelsonde vorhandenen Markierung ausgebildet ist.

Das erfindungsgemäße Verfahren ist definiert durch die Merkmale von Anspruch 1. Die erfindungsgemäße Vorrichtung ist definiert durch die Merkmale von Anspruch 8.

Die Erfindung basiert auf dem Gedanken, die Stromstärke des durch die Ansaugöffnung in die Schnüffelsonde angesaugten Gaststroms periodisch wiederholt zu variieren und dabei den Totaldruck des mit der Schnüffelsonde angesaugten Gases am Sensor möglichst konstant zu halten. Schwankungen des Totaldrucks von mehr als 10 Prozent sollen dabei vermieden werden. Zudem ist der Totaldruck des Gases in der Umgebung des Prüflings im Bereich der Schnüffelsonde ungefähr atmosphärischer Druck und der Totaldruck am Sensor sollte vorzugsweise auf einen Wert von mindestens 80 Prozent des Totaldrucks in der Prüflingsumgebung im Bereich der Schnüffelsonde eingestellt werden. In diesem Bereich ist der Zusammenhang zwischen Gasfluss und Gasdruck näherungsweise linear. Bei nur vernachlässigbaren Schwankungen des Totaldrucks am Sensor von maximal 10 Prozent besteht näherungsweise der nachfolgend beschriebene Zusammenhang zwischen dem mit dem Sensor gemessenen Prüfgaspartialdruck und der Prüfgaskonzentration in dem angesaugten Gasstrom:

$$P_{Prüfgas} = \left( \frac{Q_{Leck}}{Q_{Fluss}} + c_0 \right) \cdot P_{total},$$

wobei $P_{Prüfgas}$ der mit dem Sensor gemessene Prüfgaspartialdruck, $P_{total}$ der Totaldruck am Sensor, $Q_{Leck}$ der Gasfluss durch das Leck (Leckrate), $Q_{Fluss}$ die Flussrate des Gases am Sensor und $c_o$ die Prüfgaskonzentration in der den Prüfling umgebenden Atmosphäre (Störgas) ist.

Bei vernachlässigbar geringem Leckagegasstrom, das heißt Prüfgasstrom, der aus einem Leck im Prüfling resultiert, resultiert ein nährungsweise konstanter vernachlässigbar variierender Prüfgaspartialdruck. Wenn nämlich kein Prüfgas aus einem Leck ausströmt, resultiert der Prüfgaspartialdruck aus der konstanten Konzentration des Störgases, das dem Prüfgas entspricht oder zumindest ähnelt (zum Beispiel bei der Infrarotabsorption) und welches in der den Prüfling umgebenden Atmosphäre vorhanden ist. Wenn allerdings der aus einem Leck im Prüfling ausströmende Prüfgasstrom mit der Schnüffelsonde angesaugt wird, bewirkt eine periodisch wiederholt variierende Stromstärke des angesaugten Gasstroms einen periodisch variierenden Anteil des Prüfgaspartialdrucks am Sensor.

Um zu ermitteln, ob Prüfgas aus einem Leck im Prüfling ausströmt oder aus der den Prüfling umgebenden Atmosphäre stammt, wird der angesaugte Gasstrom also daraufhin untersucht, ob der gemessene Prüfgaspartialdruck einen variierenden Anteil aufweist, dessen mittlere Amplitude oberhalb eines Schwellenwertes liegt, das heißt nicht vernachlässigbar ist, und dem Variieren des angesaugten Gasstromes folgt, das heißt zum Beispiel, dass die Frequenz des variierenden Prüfgaspartialdruckanteils der Frequenz der variierenden Stromstärke des angesaugten Gasstromes entspricht. Wenn ein variierender Prüfgaspartialdruckanteil oberhalb des Schwellenwertes liegt, dient dies als Hinweis auf ein Leck im Prüfling. Die Auswertevorrichtung gibt dann an, dass der Prüfling ein Leck aufweist. Wenn kein variierender Prüfgaspartialdruckanteil ermittelt wird, oder ein variierender Prüfgaspartialdruck anteil unterhalb eines gemessenen Schwellenwertes liegt, dient dies als Hinweis darauf, dass der Prüfling kein Leck aufweist, sondern dass das Prüfgas aus der den Prüfling umgebenden Atmosphäre stammt und somit ein Störgas ist. Es kann dann angegeben werden, dass der Prüfling kein Leck aufweist.

Die Konzentration c von Prüfgas in dem angesaugten Gasstrom ergibt sich für eine Leckrate $Q_{Leck}$ und der Flussrate $Q_{Fluss}$, wobei $Q_{Leck} \ll Q_{Fluss}$, sowie für die in der den Prüfling umgebenden Atmosphäre vorhandene Prüfgaskonzentration co (Störgas) aus der Formel

$$c = \frac{Q_{Leck}}{Q_{Fluss}} \left( 1 - C_0 \right) + C_0 .$$

Aus dieser Beziehung ist ersichtlich, dass bei vernachlässigbar kleiner Leckrate, wenn der Prüfling also kein Leck oder zumindest ein vernachlässigbar kleines Leck c = co ist. Die Prüfgaskonzentration im angesaugten Gasstrom ist dann die (von Störgas verursachte) Prüfgaskonzentration co in der den Prüfling umgebenden Atmosphäre.

Bei vorhandener Leckrate $Q_{Leck}$ führt ein periodisch wiederholtes Variieren der Stromstärke des angesaugten Gasstroms zu einer periodisch wiederholt variierenden Flussrate $Q_{Fluss}$ (t). Für die Prüfgaskonzentration ergibt sich dann ein mit der Flussrate periodisch variierender Wechselanteil und ein der Prüfgaskonzentration co in der den Prüfling umgebenden Atmosphäre entsprechender Gleichanteil.

Der den Prüfgaspartialdruck des Prüfgases ermittelnde Sensor misst unter Berücksichtigung des Zusammenhangs $p_{prüf} = c \cdot p_{total}$ einen Prüfgaspartialdruck, der einen Gleichanteil $c_0 \cdot p_{total}$ und einen mit der Flussrate des angesaugten Gasstroms variierenden Anteil

$$\frac{Q_{Leck}}{Q_{Fluss}} (t) \cdot p_{total}$$ aufweist.

Daraus ist ersichtlich, dass ein möglichst konstanter Totaldruck $p_{total}(t)$ des angesaugten Gasstromes am Sensor von besonderer Bedeutung für die Erfindung ist, denn nur dann resultiert im Falle eines nicht vorhandenen oder vernachlässigbar geringen Lecks im Prüfling ein nährungsweise konstanter Prüfgasanteil, das heißt ein Prüfgasanteil, dessen Schwankung geringer ist als ein vorgegebener Schwellenwert.

Der Schwellenwert nach einer separat durchzuführenden Kalibrierung festgelegt. Dabei sollte das kleinste nachweisbare Leck eine Partialdruckänderung bewirken, die höher ist als die unvermeidbare Partialdruckschwankung aus der Prüfgaskonzentration in der umgebenden Atmosphäre.

Der Totaldruck $p_{total}$ des angesaugten Gasstroms am Sensor sollte vorzugsweise im Bereich zwischen 90 und 110 Prozent des Totaldrucks in der den Prüfling umgebenden Atmosphäre im Bereich der Schnüffelsonde liegen. Dies kann atmosphärischer Druck sein, das heißt der Prüfling ist der Atmosphäre ausgesetzt und weist in seinem Inneren einen Druck auf, der oberhalb atmosphärischen Drucks liegt, während am Sensor des Schnüffellecksuchers ein Totaldruck im Bereich von 90 bis 110 Prozent des atmosphärischen Drucks eingehalten wird, der zudem vernachlässigbare Schwankungen aufweisen soll, das heißt um weniger als 10 Prozent variieren soll.

Das Messsignal der Stromstärke des angesaugten Gasstroms kann mit einer Modulationsfrequenz und -phase moduliert werden. Die Demodulation des modulierten Stromstärkesignals kann nach dem Prinzip eines Lock-in-Verstärkers mit einem definierten Frequenz- und Phasenbezug zu der Modulation des Stromstärkesignals erfolgen. Frequenz- und Phasenbezug bedeutet, dass die Demodulationsfrequenz und -phase ein Vielfaches der Frequenz und der Phase der Modulation betragen.

Eine zusätzliche Vergleichsmessung kann erfolgen, bei der die Stromstärke des angesaugten Gasstroms nicht periodisch variiert wird, sondern konstant gehalten wird, um den Prüfgaspartialdruck, in der den Prüfling umgebenden Atmosphäre bestimmen zu können. Vorzugsweise liegt die Modulationsfrequenz der Modulation der Stromstärke des angesaugten Gasstroms im Bereich von 1 Hz - 20 Hz und vorzugsweise im Bereich von 3 Hz - 10 Hz.

Bei dem erfindungsgemäßen Schnüffellecksucher verbindet ein Gasleitungweg, bei dem es sich um eine Gasleitung handeln kann, die Ansaugöffnung der Schnüffelsonde, den Sensor und eine Gaspumpe. Der Sensor ist zum Ermitteln des Prüfgaspartialdrucks des zu detektierenden Prüfgases im angesaugten Gasstrom ausgebildet. Die Gaspumpe erzeugt den zum Ansaugen des Gases erforderlichen Gasdruck. Eine Steuervorrichtung ist dazu ausgebildet, die Stromstärke des angesaugten Gasstromes wiederholt zu variieren und Schwankungen des Totaldrucks des Gases am Sensor von mehr als 10 Prozent zu vermeiden. Eine Auswertevorrichtung ist dazu ausgebildet zu messen und zu ermitteln, ob der Prüfgaspartialdruck von Prüfgas, das in dem angesaugten Gasstrom enthalten ist, einen variierenden Anteil aufweist, dessen mittlere Amplitude oberhalb des zuvor beschriebenen Schwellenwertes liegt und der dem Variieren des angesaugten Gasstromes folgt. Dies kann zum Beispiel der Fall sein, wenn die Frequenz des variierenden Anteils des Prüfgaspartialdrucks der Frequenz des variierten Gasstromes entspricht und die Phase in einer festen Beziehung zu der Phase der Gasstrommodulation steht.

Die Steuervorrichtung ist vorzugsweise dazu ausgebildet, den Totaldruck des angesaugten Gasstroms am Sensor auf einen Wert im Bereich von etwa 80 Prozent und vorzugsweise im Bereich zwischen 90 - 110 Prozent des Totaldrucks des Gases in der den Prüfling umgebenden Atmosphäre einzustellen. In diesem Bereich ist der Zusammenhang zwischen Gasfluss und Gasdruck näherungsweise linear. Zudem sollte die Steuervorrichtung dazu ausgebildet sein, den Leckgasstrom in Bezug zu einer Kalibrierung mit einem bekannten Testleck zu ermitteln.

Schwankungen des Totaldrucks des Gases am Sensor können beispielsweise unterdrückt oder reduziert werden, indem der Sensor stromabwärts der Gaspumpe angeordnet ist. Alternativ oder ergänzend kann der Gasleitungsweg zwischen Ansaugöffnung und Sensor eine Drossel aufweisen. Die Steuervorrichtung kann zur Reduzierung von Schwankungen des Gasflusses die Förderleistung oder Drehzahl der Gaspumpe steuern und/oder den Leitwert bzw. den Flusswiderstand der Drossel verändern. Bei der Drossel kann es sich um eine Kapillare handeln, die beispielsweise eine Länge im Bereich von ca. 2 cm bis ca. 1 m und einen Durchmesser von maximal ca. 5 mm aufweist. Längere Kapillaren sind jedoch auch denkbar.

Im Folgenden werden anhand der Figuren Ausführungsbeispiele der Erfindung näher erläutert. Es zeigen:

Fig. 1    eine schematische Darstellung eines ersten Ausführungsbeispiels,

Fig. 2    eine schematische Darstellung eines zweiten Ausführungsbeispiels,

Fig. 3    eine schematische Darstellung eines dritten Ausführungsbeispiels,

Fig. 4    den Verlauf des angesaugten Gasflusses über dem Druck am Sensor für verschiedene Durchmesser des Flussweges,

Fig. 5    ein Detail aus Fig. 4,

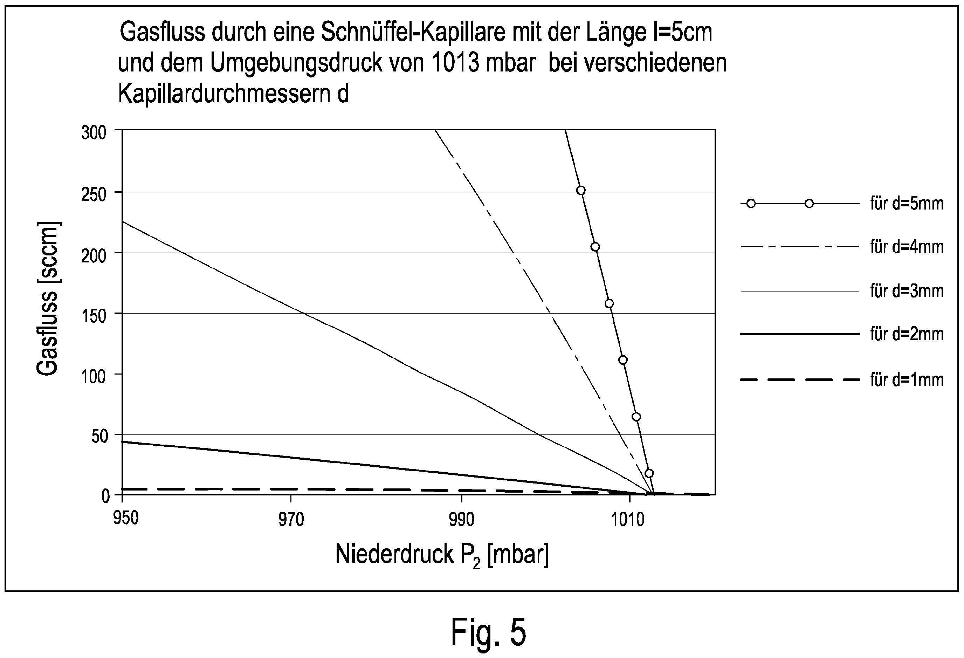

Fig. 5    ein viertes Ausführungsbeispiel,

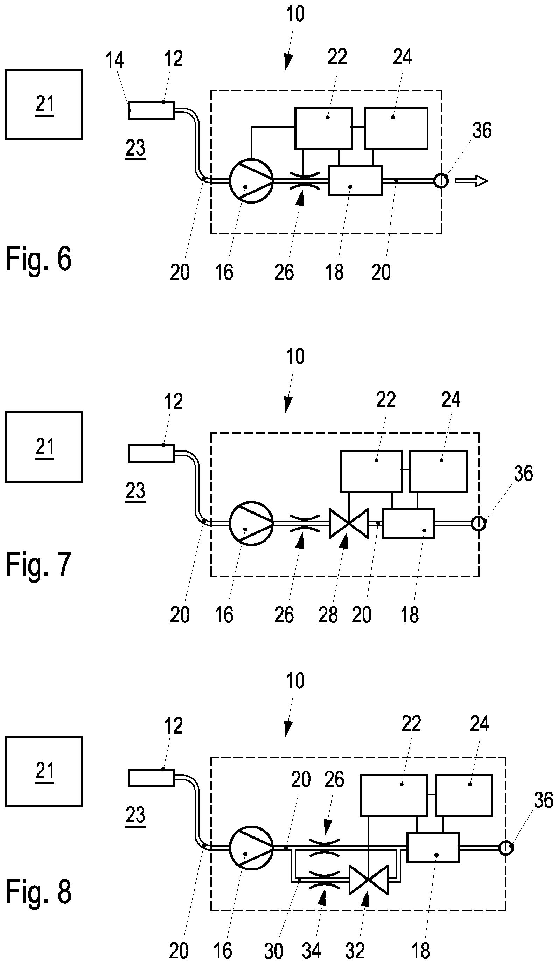

Fig. 7    ein fünftes Ausführungsbeispiel und

Fig. 8    ein sechstes Ausführungsbeispiel.

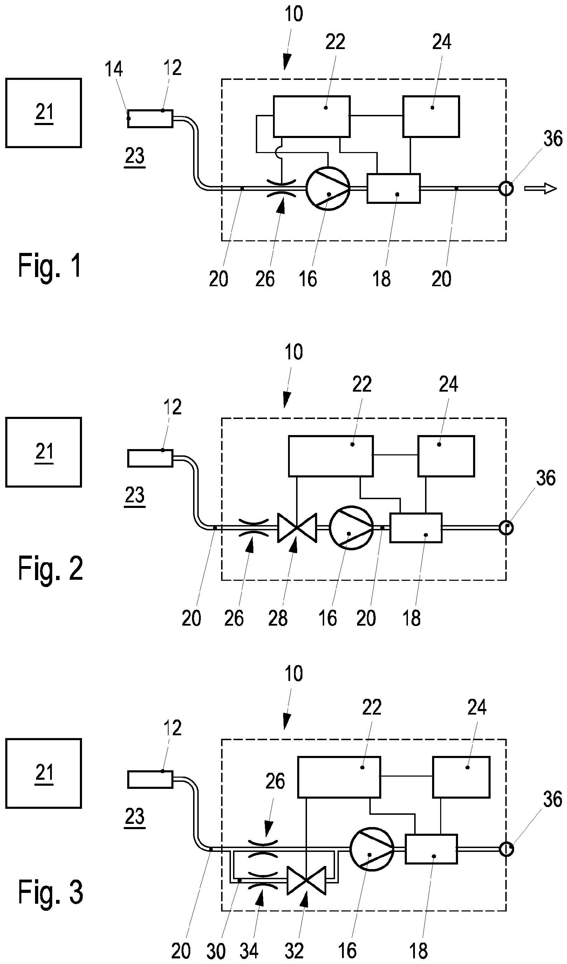

Die Schnüffellecksucher 10 der drei in den Fign. 1 bis 3 dargestellten Ausführungsbeispiele sind jeweils über einen Gasleitungsweg 20 auf herkömmliche Weise mit einer Schnüffelsonde 12 mit einer Ansaugöffnung 14 verbunden . Entlang des Gasleitungsweges 20 ist eine Gaspumpe 16 angeordnet, die den zum Ansaugen des Gases aus der den Prüfling 21 umgebenden Atmosphäre 23 erzeugt.

Der Gasleitungsweg 20 verbindet ferner in Form einer herkömmlichen Gasleitung die Pumpe 16 mit einem unmittelbar stromabwärts der Pumpe 16 angeordneten Sensor 18. Der Sensor 18 ist zum Messen des Partialdrucks des Prüfgases in dem angesaugten Gasstrom ausgebildet. Bei dem Sensor 18 kann es sich beispielsweise um eine Infrarot-Absorptions-Küvette handeln. Wichtig ist, dass der Sensor 18 dazu ausgebildet ist, den Prüfgaspartialdruck bei annähernd atmosphärischem Druck oder bei etwa 90 - 110 Prozent des atmosphärischen Drucks zu ermitteln. Der Prüfgaspartialdruck ist der Anteil des Prüfgases im Gasgemisch des angesaugten Gasstroms. Der Partialdruck des Prüfgases kann somit nicht mit einem Drucksensor gemessen werden. Ein Drucksensor misst lediglich den Totaldruck eines Gasgemisches.

Nachdem der angesaugte Gasstrom den Sensor 18 durchströmt hat, führt der Gasleitungsweg 20 den Gasstrom über einen Auslass 36 zu Atmosphäre hin ab.

Der Gasleitungsweg 20 kann eine Drossel 26 aufweisen. Die Drossel 26 kann, wie in Fig. 1 dargestellt stromaufwärts der Gaspumpe 16 angeordnet sein. Eine Steuervorrichtung 22 ist zum Steuern der Gaspumpe 16 elektronisch mit dieser verbunden. Beispielsweise kann die Steuervorrichtung 22 zum Steuern der Drehzahl der Gaspumpe 16 ausgebildet sein. Fig. 1 zeigt, dass die Steuervorrichtung 22 auch mit der Drossel 26 verbunden sein kann, um den Leitwert der Drossel 26 zu verändern. Zudem kann die Steuervorrichtung auch mit dem Sensor 18 elektronisch verbunden sein.

Eine Auswertevorrichtung 24 ist elektronisch mit dem Sensor 18 verbunden, um das Messsignal zu verarbeiten und auszuwerten. Die Auswertevorrichtung 24 ist dazu ausgebildet, zu ermitteln, ob der Prüfgaspartialdruck des in dem angesaugten Gassstrom enthaltenen Prüfgases einen variierenden Anteil aufweist. Insbesondere kann die Auswertevorrichtung 24 prüfen, ob der variierende Anteil des Prüfgaspartialdrucks eine oberhalb eines Schwellenwertes liegende mittlere Amplitude aufweist. Zudem kann die Auswertevorrichtung 24 ermitteln, ob der variierende Anteil des Prüfgaspartialdrucks dem Variieren des angesaugten Gasstromes folgt. Dies ist der Fall, wenn die Frequenz des variierenden Prüfgaspartialdruckanteils der Frequenz des variierten Gasstromes oder einem Vielfachen dieser Frequenz entspricht.

Hierzu kann die Auswertevorrichtung 24 mit der Steuervorrichtung 22 verbunden sein. Die Steuervorrichtung 22 variiert beispielsweise die Stromstärke des angesaugten Gasstromes, indem die Pumpendrehzahl variiert wird. Dies kann in Form einer Modulation, beispielsweise nach dem Prinzip des Lock-In Verstärkers erfolgen. Die Auswertevorrichtung 24 kann einen Abgleich der Frequenz eines variierenden Prüfgaspartialdruckes mit der Modulationsfrequenz des angesaugten Gasstromes durchführen.

Die Auswertevorrichtung 24 ist zudem dazu ausgebildet, im Rahmen einer Kalibrierung den Leckagestrom eines bekannten Lecks mit bekannter Leckrate zu ermitteln.

Die Steuervorrichtung 22 des ersten Ausführungsbeispiels ist zudem dazu ausgebildet, den Totaldruck des angesaugten Gasstromes im Bereich des Sensors 18 auf mindestens etwa 90 - 110 Prozent des Totaldrucks des Gases in der den Prüfling 21 umgebenden Atmosphäre 23 einzustellen. Wie nachfolgend in Bezug auf Fig. 5 noch erläutert wird, ist der Zusammenhang zwischen Gasfluss und Gasdruck in diesem Druckbereich näherungsweise linear. Das Einstellen des Totaldrucks des angesaugten Gasstroms am Sensor 18 kann über eine Steuerung der Drehzahl der Gaspumpe 16 und/oder über eine Steuerung des Leitwerts der Drossel 26 erfolgen.

Die Ausführungsbeispiele beziehen sich auf direkt stromabwärts der Gaspumpe 16 angeordnete Sensoren. Bei dieser Anordnung sind Schwankungen des Totaldrucks des Gases am Sensor 18 reduziert. Alternativ ist es jedoch auch möglich, den Sensor 18 stromaufwärts der Gaspumpe 16, das heißt zwischen Schüffelsonde 12 und Gaspume 16 anzuordnen.

Das Ausführungsbeispiel nach Fig. 2 unterscheidet sich von dem Ausführungsbeispiel nach Fig. 1 dadurch, dass stromaufwärts der Gaspumpe 16 ein über die Steuervorrichtung 22 steuerbares Ventil 28 vorgesehen ist, um den Leitungsquerschnitt des Gasleitungswegs 20 zu verändern. Vorzugsweise ist das steuerbare Ventil 28 zwischen der Drossel 26 und der Gaspumpe 16 angeordnet. Über das Verändern des Querschnitts des Gasleitungsweges 20 mit Hilfe des steuerbaren Ventils 28 kann der Leitwert des Gasleitungsweges 20 verändert und insbesondere variiert werden. Dadurch wird im zweiten Ausführungsbeispiel die Stromstärke des angesaugten Gasstroms wiederholt variiert.

Das dritte Ausführungsbeispiel unterscheidet sich von dem zweiten Ausführungsbeispiel dadurch, dass ein Bypass 30 den Gasleitungsweg 20 zwischen der Schnüffelsonde 12 und der Gaspumpe 16 und insbesondere die Drossel 26 überbrückt. Der Bypass 30 ist mit einer Drossel 34 versehen, deren Leitwert sehr viel größer als der Leitwert der Drossel 26 ist. Die Bypassleitung 30 weist ein steuerbares Ventil 32 auf, das zu dessen Steuerung elektronisch mit der Steuervorrichtung 22 verbunden ist. Beim Vergrößern des Leitwerts des Ventils 32 wird der Gasfluss in dem überbrückten Gasleitungsweg 20 vermindert. Beim Reduzieren des Leitwerts des Ventils 32 wird der Gasfluss in dem überbrückten Gasleitungsweg 20 erhöht. Auf diese Weise kann mit Hilfe der Steuervorrichtung 22 und des gesteuerten Ventils 32 der Bypassleitung 30 die Stromstärke des angesaugten Gasstroms variiert werden.

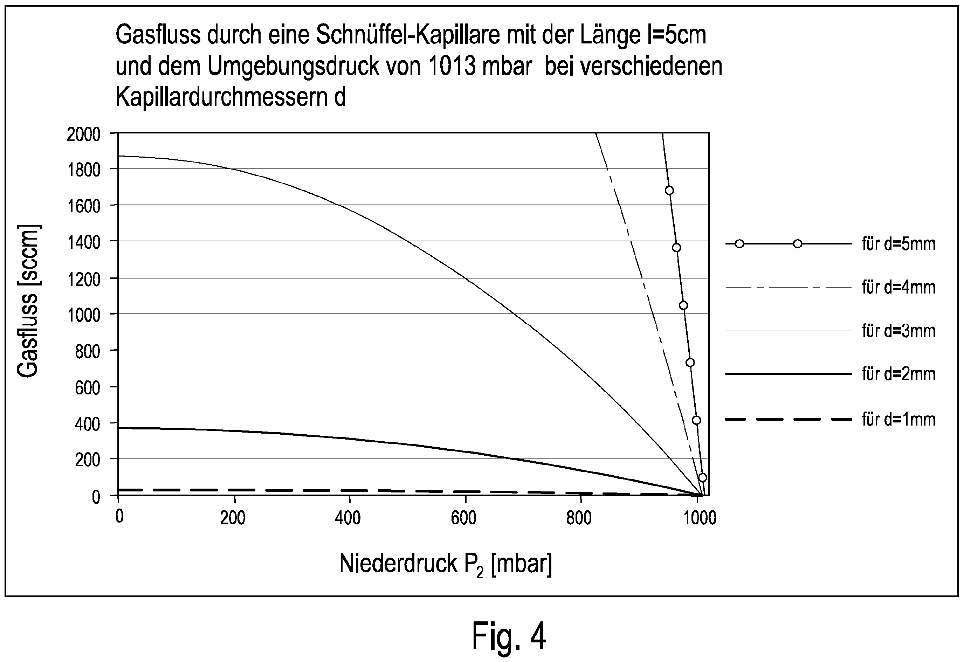

Bei der Drossel 26 kann es sich um eine Kapillare handeln, deren Länge im Bereich von ca. 2 cm bis ca. 10 cm liegt und deren Durchmesser maximal etwa 5 mm beträgt. In den Fign. 4 und 5 ist der resultierende Gasfluss in sccn (Standardkubikzentimeter pro Minute, $cm^3$/min) auf der vertikalen Achse (Ordinate) über dem Druck in mbar (Milibar) auf der horizontalen Achse (Abszisse) für verschiedene Durchmesser der als Kapillare ausgebildeten Drossel 26 aufgetragen. Bei dem auf der Horizontalachse aufgetragenen Druck $P_2$ handelt es sich um den Druck $P_2$ innerhalb des Gasleitungsweges 20 stromabwärts der Gaspumpe 16 im Bereich des Sensors 18. Der Umgebungsdruck in der Umgebung 23 des Prüflings 21 beträgt 1013 mbar (atmosphärischer Druck). Als atmosphärischer Druck wird vorliegend ein Druck verstanden, der im Bereich vom ca. 900 mbar bis ca. 1100 liegen kann.

Fig. 4 zeigt den Verlauf der sich einstellenden Gasflüsse für verschiedene Durchmesser d der Kapillare der Drossel 26 im Bereich zwischen 0 mbar und 1000 mbar. Die Länge der Kapillare beträgt 5 cm. Fig. 5 zeigt die Verläufe gemäß Fig. 4 in dem Druckbereich zwischen 950 und 1015 mbar. Aus Fig. 5 ist ersichtlich, dass der Zusammenhang zwischen Gasfluss und Gasdruck näherungsweise linear ist, wenn der Druck mindestens 950 mbar beträgt. Daher ist es erfindungsgemäß von Vorteil, wenn der Totaldruck des angesaugten Gasstroms am Sensor 18 auf einem Wert im Bereich zwischen etwas 90% und 110% des Totaldrucks in der Umgebung des Prüflings 21 eingestellt wird. Von besonderer Bedeutung ist grundsätzlich, dass die Totaldruckänderung vernachlässigbar ist und damit eine große Flussänderung bewirkt.

Durch geringfügige Änderung des Niederdrucks am Sensor von zum Beispiel 985 mbar auf 1000 mbar einer Kapillarlänge von 5 cm und einem Durchmesser von 3 mm ändert sich der Fluss um einen Faktor 2 von 100 sccn auf 50 sccn. Dieser Aspekt grenzt sich von den Anwendungen im Vakuumbereich ab, wie sie beispielsweise in DE 4408877 A1 / EP 7050738 B1 beschrieben sind. Wenn der Druck $P_2$ am Ort des Sensors 18 sehr gering ist, wie beispielsweise bei Vakuumlecksuchern, beeinflusst eine Änderung des Drucks zum Beispiel von 0,1 mbar zu 50 mbar den Gasfluss nur geringfügig.

Ein typisches Leck im Prüfling 21 kann einen Leckagegasstrom von $1 \cdot 10^4$ mbar $\cdot$ l/s verursachen. Der Fluss bzw. die Stromstärke des angesaugten Gasstroms wird im Bereich zwischen 120 sccm und 12 sccm mit einer Modulationsfrequenz von 6 Hz moduliert. Der Totaldruck schwankt dabei mit der Modulationsfrequenz zwischen 1000 mbar und 950 mbar. Die Umgebungskonzentration co kann 400 ppm betragen. Die Totaldruckschwankung von 50 mbar ist vergleichsweise hoch. Dennoch ist die durch die Totaldruckschwankung verursachte Partialdruckschwankung gering und somit vernachlässigbar im Vergleich zu dem variierenden Anteil des Partialdrucks, der aus der Flussmodulation resultiert. In der Praxis ist die Schwankung des Totaldruck noch deutlich geringer als 50 mbar. Das Ausführungsbeispiel nach Fig. 6 unterscheidet sich von dem Ausführungsbeispiel nach Fig. 1 dadurch, dass die Gaspumpe 16 nicht zwischen der Drossel 26 und dem Sensor 18 in dem Gasleitungsweg 20 angeordnet ist, sondern in dem Gasleitungsweg 20 zwischen der Schnüffelsonde 12 und der Drossel 26, das heißt stromaufwärts der Drossel 26 angeordnet ist.

Das Ausführungsbeispiel von Fig. 7 unterscheidet sich von dem Ausführungsbeispiel nach Fig. 2 dadurch, dass die Gaspumpe 16 nicht zwischen dem Ventil 28 und dem Sensor 18 angeordnet ist, sondern ebenfalls wie bei dem Ausführungsbeispiel nach Fig. 6 stromaufwärts der Drossel 26.

Entsprechendes gilt für das Ausführungsbeispiel nach Fig. 8, bei dem die Gaspumpe 16 nicht wie in Fig. 3 zwischen der Parallelschaltung aus Drossel 26 und Ventil 32 und dem Sensor 18 angeordnet ist, sondern in dem Gasleitungsweg 20 stromaufwärts der Parallelschaltung aus den Drosseln 26 und 34.

## Patentansprüche

1. Verfahren zur Unterscheidung eines aus einem Leck in einem Prüfling (21) austretenden Prüfgases von einem Störgas in der Umgebung des Prüflings (21) bei der Schnüffellecksuche, mit den Schritten:

   Ansaugen von Gas aus der Umgebung des Prüflings (21) im Bereich der äußeren Prüflingsoberfläche mit einer Schnüffelspitze, die eine Ansaugöffnung (14) aufweist, die gasleitend mit einem Sensor (18) verbunden ist, der zum Ermitteln des Prüfgaspartialdrucks des Prüfgases im angesaugten Gasstrom ausgebildet ist,
   periodisch wiederholtes Variieren der Stromstärke des angesaugten Gasstroms,
   Einstellen eines Totaldrucks des angesaugten Gases am Sensor (18) von mindestens 80 Prozent des Totaldrucks des Gases in der den Prüfling (21) umgebenden Atmosphäre (23),
   Vermeiden von Schwankungen des Totaldrucks des angesaugten Gases am Sensor (18) von mehr als 10 Prozent,
   Messen des Prüfgaspartialdrucks von in dem angesaugten Gasstrom enthaltenem Prüfgas mit dem Sensor (18), und
   Angeben, dass der Prüfling (21) ein Leck aufweist, wenn der gemessene Prüfgaspartialdruck einen variierenden Anteil aufweist, dessen mittlere Amplitude oberhalb eines Schwellenwerts liegt und der dem Variieren des angesaugten Gasstroms folgt.

2. Verfahren nach Anspruch 1, **dadurch gekennzeichnet, dass** angegeben wird, dass kein Leck vorliegt, wenn der gemessene Prüfgasanteil keinen den Schwellenwert übersteigenden Anteil aufweist.

3. Verfahren nach Anspruch 1 oder 2, **dadurch gekennzeichnet, dass** das periodisch wiederholte Variieren der Stromstärke des angesaugten Gasstroms in Form einer Modulation mit einer Modulationsfrequenz im Bereich von 1 Hz bis 20 Hz erfolgt.

4. Verfahren nach einem der vorhergehenden Ansprüche, **dadurch gekennzeichnet, dass** der Totaldruck des angesaugten Gasstroms am Sensor (18) auf einen Wert im Bereich zwischen 90 Prozent und 110 Prozent des Totaldrucks in der Prüflingsatmosphäre eingestellt wird.

**5.** Verfahren nach einem der vorhergehenden Ansprüche, **dadurch gekennzeichnet, dass** die Demodulation des modulierten Stromstärkesignals des angesaugten Gasstroms nach dem Prinzip eines Lock-In-Verstärkers mit einem definierten Frequenz- und Phasenbezug zur Modulation des angesaugten Gasstroms erfolgt.

**6.** Verfahren nach einem der vorhergehenden Ansprüche, **dadurch gekennzeichnet, dass** zusätzlich eine Vergleichsmessung des Prüfgaspartialdrucks ohne Variieren der Stromstärke des angesaugten Gasflusses erfolgt.

**7.** Verfahren nach einem der vorhergehenden Ansprüche, **dadurch gekennzeichnet, dass** der Totaldruck in der den Prüfling (21) umgebenden Atmosphäre (23) im Bereich der Schnüffelsonde (12) atmosphärischer Druck im Bereich von ca. 900 mbar bis ca. 1100 mbar ist.

**8.** Schnüffellecksucher (10) zur Durchführung des Verfahrens nach einem der vorhergehenden Ansprüche, mit

einer Schnüffelsonde (12) mit einer Ansaugöffnung (14),
einer Gaspumpe (16),
einem den Prüfgaspartialdruck des zu detektierenden Prüfgases ermittelnden Sensor (18),
einem die Ansaugöffnung (14), den Sensor (18) und die Gaspumpe verbindenden Gasleitungsweg (20),
einer Steuervorrichtung (22), die dazu ausgebildet ist, die Stromstärke des angesaugten Gasstroms wiederholt zu variieren, den Totaldruck des angesaugten Gasstroms am Sensor (18) auf mindestens etwa 80 Prozent des Totaldrucks des Gases in der den Prüfling (21) umgebenden Atmosphäre (23) einzustellen und Schwankungen des Totaldrucks des Gases am Sensor (18) von mehr als 10 Prozent zu vermeiden, und
einer Auswertevorrichtung (24), die dazu ausgebildet ist, zu ermitteln, ob der Prüfgaspartialdruck von in dem angesaugten Gasstrom enthaltenen Prüfgas einen variierenden Anteil aufweist, dessen mittlere Amplitude oberhalb eines Schwellenwertes liegt und der dem Variieren des angesaugten Gasstromes folgt.

**9.** Schnüffellecksucher (10) nach dem vorhergehenden Anspruch, **dadurch gekennzeichnet, dass** der Sensor (18) stromabwärts der Gaspumpe (16) angeordnet ist.

**10.** Schnüffellecksucher (10) nach einem der vorhergehenden Ansprüche, **dadurch gekennzeichnet,** **dass** der Gasleitungsweg (20) zwischen Ansaugöffnung (14) und Sensor (18) eine Drossel (26) aufweist.

**11.** Schnüffellecksucher (10) nach dem vorhergehenden Anspruch, **dadurch gekennzeichnet, dass** die Drossel (26) eine Kapillare mit einer Länge im Bereich von ca. 2 cm bis ca. 100 cm und mit einem Durchmesser von maximal ca. 5 mm ist.

**Claims**

**1.** A method for distinguishing a test gas escaping from a leak in a test object (21) from an interfering gas in the environment of the test object (21) during sniffing leak detection, comprising the following steps:

suctioning gas from the environment of the test object (21) in the region of the outer surface of the test object by means of a sniffing tip, which has a suction opening (14), which is connected, for gas conduction, to a sensor (18), which is designed to determine the test gas partial pressure of the test gas in the suctioned gas flow,
varying, with periodic repetition, the flow intensity of the suctioned gas flow,
setting a total pressure of the suctioned gas at the sensor (18) of at least 80 percent of the total pressure of the gas in the atmosphere (23) surrounding the test object (21),
avoiding fluctuations of the total pressure of the suctioned gas at the sensor (18) of more than 10 percent,
measuring the test gas partial pressure of test gas contained in the suctioned gas flow by means of the sensor (18), and
indicating that the test object (21) has a leak if the measured test gas partial pressure has a varying component, the mean amplitude of which is greater than a threshold value and which follows the variation of the suctioned gas flow.

**2.** The method according to claim 1, **characterized in that** an indication is provided that there is no leak if the measured test gas component does not have a component exceeding the threshold value.

**3.** The method according to claim 1 or 2, **characterized in that** the varying, periodically repeated, of the flow intensity of the suctioned gas flow occurs in the form of a modulation with a modulation frequency in the range of 1 Hz to 20 Hz.

**4.** The method according to any one of the preceding claims, **characterized in that** the total pressure of the suctioned gas flow at the sensor (18) is set to a value in the range between 90 percent and 110 percent of the total pressure in the test object atmosphere.

5. The method according to any one of the preceding claims, **characterized in that** the modulated flow intensity signal of the suctioned gas flow is demodulated according to the principle of a lock-in amplifier with a defined frequency reference and phase reference for modulating the suctioned gas flow.

6. The method according to any one of the preceding claims, **characterized in that** in addition there is a comparison measurement of the test gas partial pressure without varying the flow intensity of the suctioned gas flow.

7. The method according to any one of the preceding claims, **characterized in that** the total pressure in the atmosphere (23) surrounding the test object (21) in the region of the sniffer (12) is atmospheric pressure in the range of approx. 900 mbar to approx. 1100 mbar.

8. A sniffing leak detector (10) for performing the method according to any of the preceding claims, comprising

a sniffer (12) having a suction opening (14),
a gas pump (16),
a sensor (18) determining the test gas partial pressure of the test gas to be detected,
a gas line path (20) connecting the suction opening (14), the sensor (18), and the gas pump,
a control device (22) designed to repeatedly vary the flow intensity of the suctioned gas flow, to set the total pressure of the suctioned gas flow at the sensor (18) to at least about 80 percent of the total pressure of the gas in the atmosphere (23) surrounding the test object (21), and to avoid fluctuations in the total pressure of the gas at the sensor (18) of more than 10 percent, and an evaluation device (24) designed to determine whether the test gas partial pressure of test gas contained in the suctioned gas flow has a varying component, the mean amplitude of which is greater than a threshold value and which follows the variation of the suctioned gas flow.

9. The sniffing leak detector (10) according to the preceding claim, **characterized in that** the sensor (18) is arranged downstream of the gas pump (16).

10. The sniffing leak detector (10) according to any one of the preceding claims, **characterized in that** the gas line path (20) has a throttle (26) between suction opening (14) and sensor (18).

11. The sniffing leak detector (10) according to the preceding claim, **characterized in that** the throttle (26) is a capillary tube having a length in the range of approx. 2 cm to approx. 100 cm and having a diameter of a maximum of approx. 5 mm.

**Revendications**

1. Procédé pour distinguer un gaz de contrôle émanant d'une fuite d'un échantillon (21) d'un gaz d'interférence aux alentours de l'échantillon (21) lors d'une recherche de fuites par reniflement, avec les étapes :

aspirer du gaz des alentours de l'échantillon (21) dans la zone de la surface extérieure de l'échantillon au moyen d'une sonde de reniflement qui comprend une ouverture d'aspiration (14) raccordée de façon conductrice de gaz à un capteur (18) qui est configuré pour déterminer la pression partielle de gaz de contrôle du gaz de contrôle dans le flux de gaz aspiré,
varier de façon périodiquement répétée l'intensité du flux de gaz aspiré,
ajuster au capteur (18) une pression totale du gaz aspiré d'au moins 80 pourcents de la pression totale du gaz dans l'atmosphère (23) entourant l'échantillon (21),
éviter au capteur (18) des variations de la pression totale du gaz aspiré dépassant 10 pourcents,
mesurer, moyennant le capteur (18), la pression partielle de gaz de contrôle de gaz de contrôle contenu dans le flux de gaz aspiré, et
indiquer que l'échantillon (21) a une fuite, lorsque la pression partielle de gaz de contrôle comprend une partie variable dont l'amplitude moyenne est supérieure à une valeur seuil et qui suit les variations du flux de gaz aspiré.

2. Procédé selon la revendication 1, **caractérisé en ce qu'**il est indiqué qu'il n'y a pas de fuite lorsque la partie de gaz de contrôle mesurée ne comprend pas de partie dépassant la valeur seuil.

3. Procédé selon la revendication 1 ou 2, **caractérisé en ce que** la variation périodiquement répétée de l'intensité du flux de gaz aspiré s'effectue sous forme d'une modulation avec une fréquence de modulation dans la plage d'1 Hz à 20 Hz.

4. Procédé selon l'une des revendications précédentes, **caractérisé en ce que** la pression totale du flux de gaz aspiré est ajusté au capteur (18) à une valeur dans la plage entre 90 pourcents et 110 pourcents de la pression totale dans l'atmosphère de l'échantillon.

**5.** Procédé selon l'une des revendications précédentes, **caractérisé en ce que** la démodulation du signal modulé de l'intensité du flux de gaz aspiré s'effectue selon le principe d'un amplificateur lock-in avec un rapport défini de fréquence et de phase pour la modulation du flux de gaz aspiré.

**6.** Procédé selon l'une des revendications précédentes, **caractérisé en ce que**, en plus, une mesure comparative de la pression partielle du gaz de contrôle s'effectue sans variation de l'intensité du flux de gaz aspiré.

**7.** Procédé selon l'une des revendications précédentes, **caractérisé en ce que** la pression totale dans l'atmosphère (23) entourant l'échantillon (21) dans la zone de la sonde à reniflement (12) est la pression atmosphérique se situant dans la plage d'environ 900 mbar jusqu'à environ 1100 mbar.

**8.** Détecteur de fuites par reniflement (10) pour la mise en œuvre du procédé selon l'une des revendications précédentes, avec

    une sonde de reniflement (12) ayant une ouverture d'aspiration (14),
    une pompe à gaz (16),
    un capteur (18) déterminant la pression partielle de gaz de contrôle du gaz de contrôle à détecter,
    un chemin de passage de gaz (20) raccordant les uns aux autres l'ouverture d'aspiration (14), le capteur (18) et la pompe à gaz,
    un dispositif de commande (22) qui est configuré pour varier de façon répétée l'intensité du flux de gaz aspiré, ajuster au capteur (18) la pression totale du flux de gaz aspiré à au moins environ 80 pourcents de la pression totale du gaz dans l'atmosphère (23) entourant l'échantillon (21) et éviter au capteur (18) des variations de la pression totale du gaz dépassant 10 pourcents, et
    un dispositif d'évaluation (24) qui est configuré pour déterminer si la pression partielle de gaz de contrôle du gaz de contrôle contenu dans le flux de gaz aspiré comprend une partie variable dont l'amplitude moyenne est supérieure à une valeur seuil et elle suit la variation du flux de gaz aspiré.

**9.** Détecteur de fuites par reniflement (10) selon la revendication précédente, **caractérisé en ce que** le capteur (18) est disposé en aval de la pompe à gaz (16).

**10.** Détecteur de fuites par reniflement (10) selon l'une des revendications précédentes, **caractérisé en ce que** le chemin de passage de gaz (20) comprend un papillon (26) entre l'ouverture d'aspiration (14) et le capteur (18).

**11.** Détecteur de fuites par reniflement (10) selon la revendication précédente, **caractérisé en ce que** le papillon (26) est un tube capillaire d'une longueur dans la plage d'environ 2 m à 100 cm et d'un diamètre d'environ 5 cm maximal.

Fig. 1

Fig. 2

Fig. 3

Gasfluss durch eine Schnüffel-Kapillare mit der Länge l=5cm und dem Umgebungsdruck von 1013 mbar bei verschiedenen Kapillardurchmessern d

Legend:
- für d=5mm
- für d=4mm
- für d=3mm
- für d=2mm
- für d=1mm

Y-axis: Gasfluss [sccm]
X-axis: Niederdruck $P_2$ [mbar]

EP 3 688 438 B1

Fig. 4

Gasfluss durch eine Schnüffel-Kapillare mit der Länge l=5cm und dem Umgebungsdruck von 1013 mbar bei verschiedenen Kapillardurchmessern d

für d=5mm
für d=4mm
für d=3mm
für d=2mm
für d=1mm

Gasfluss [sccm]

Niederdruck $P_2$ [mbar]

Fig. 5

EP 3 688 438 B1

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1342070 B1
- EP 22384422 B1
- EP 7050738 B1
- DE 4408877 A1
- EP 1555520 A1
- DE 102010007417 A1
- JP 2001050852 A
- WO 2009051530 A1